Europäisches Patentamt

(19) European Patent Office

Office européen des brevets

(11) Numéro de publication : **0 278 840 B1**

(12) # FASCICULE DE BREVET EUROPEEN

(45) Date de publication du fascicule du brevet :
04.12.91 Bulletin 91/49

(51) Int. Cl.$^5$ : **E04F 15/12, // C04B26/06**

(21) Numéro de dépôt : **88400188.4**

(22) Date de dépôt : **28.01.88**

(54) **Procédé d'égalisation d'un sol de construction dans le but de le rénover et composition d'égalisation correspondante.**

(30) Priorité : 30.01.87 FR 8701167

(43) Date de publication de la demande :
17.08.88 Bulletin 88/33

(45) Mention de la délivrance du brevet :
04.12.91 Bulletin 91/49

(84) Etats contractants désignés :
AT BE CH DE ES FR GB GR IT LI LU NL SE

(56) Documents cités :
AU-A- 508 029
DE-A- 2 653 412
FR-A- 2 186 444
GB-A- 714 782
NL-A- 8 005 523

(73) Titulaire : **COLLES, ADHESIFS ET MASTICS AURAIX S.A.**
**Creuzier-le-Vieux**
**F-03300 Cusset (FR)**

(72) Inventeur : **Duriez, André**
**35, avenue Fernand Javal**
**Livry-sur-Seine F-77000 Melun (FR)**

(74) Mandataire : **Chaillot, Geneviève**
**Cabinet CHAILLOT 21, avenue Louise de Bettignies**
**F-92700 Colombes (FR)**

EP 0 278 840 B1

## Description

La présente invention concerne le domaine de la rénovation des constructions, et, plus particulièrement, la remise en état des sols, et elle a pour objet, d'une part, un procédé d'égalisation d'un sol de construction dans le but de le rénover, et, d'autre part, la composition d'égalisation correspondante.

A l'heure actuelle, les entrepreneurs en bâtiments sont fréquemment amenés à réaliser des remises en état de sols de constructions publiques, de locaux individuels et commerciaux, ainsi que le logements privés, et dont la réfection des aménagements intérieurs s'impose pour des raisons de salubrité, d'usure normale ou de confort.

Or, la remise en état des sols de ces immeubles implique actuellement des contraintes différentes de celles de la mise en oeuvre traditionnelle :

(1)    l'exécution doit être très rapide afin de perturber le moins possible le fonctionnement des établissements en activité (bureaux, chambres d'établissements hospitaliers ou hôteliers, couloirs de desserte, etc.)

(2)    Pour la même raison, le travail doit être effectué par opérations locales successives ;

(3)    il faut tenir compte des nuisances liées à la remise en état du sol, telles que les bruits, notamment dans le cas de la dépose de carrelages ; des émanations toxiques ou inflammables engendrées par les produits de décapage des supports ; la poussière engendrée par le ponçage des supports ; les risques d'incendie par suite d'utilisation de produits inflammables à proximité d'un public non averti, ou insuffisamment averti, du danger ; le cas échéant, les risques d'explosion par étincelle électrique de matériels de service : ascenseurs ou minuterie ; ainsi que les odeurs désagréables ;

(4)    un diagnostic de l'état des sols s'impose avant tous travaux de réflection, afin de décider des opérations les plus adéquates, telles que, par exemple, une rénovation totale ou partielle, une consolidation locale ou généralisée, des opérations limitées de nettoyage ou d'assainissement.

Les produits traditionnels de préparation des supports avant le collage des revêtements de sols, qui sont généralement constitués par des enduits de lissage à base de ciment ou de plâtre et par des primaires d'adhérence, ne peuvent satisfaire la plupart des contraintes énumérées ci-dessus, soit pour des raisons d'inadéquation technique des produits (défaut de flexibilité des enduits à base de liants hydrauliques sur des supports soumis à des flexions, défaut d'adhérence sur des supports hétérogènes), soit pour des raisons de sécurité (inflammabilité des primaires d'adhérence), ou encore pour des durées cumulées de mise en oeuvre, qui sont inconciliables avec l'usage des locaux à réhabiliter. Ceci est notamment le cas du procédé décrit par la demande de brevet néerlandais n° 80-05523, comprenant la réparation de planchers industriels par application d'au moins une couche de mortier hydraulique élastique et durcissement de cette couche, document selon lequel ledit mortier hydraulique élastique est par exemple composé de sable, ciment, latex naturel et particules en caoutchouc. Il en va de même pour le brevet français n° 2186444 décrivant la préparation d'un revêtement de sol résistant à partir d'un mortier en ciment et matière plastique par évaporation d'une partie de l'eau, durcissement du ciment avec l'eau restante et formation d'un film de dispersion de matière plastique.

Il existe donc, dans l'industrie du bâtiment, un besoin non satisfait en produits de mise en oeuvre simple, rapide et sans danger, apportant au problème posé des solutions fiables et, dans toute la mesure du possible, polyvalentes.

La Société Déposante s'est penchée sur ce problème à résoudre. Elle a tout d'abord songé à rechercher une formulation optimale pour les produits qui sont estimés nécessaires pour qu'un entrepreneur puisse réaliser un ouvrage convenable, ces produits étant :

— d'une part les produits de préparation des supports, ou primaires ; et

— d'autre part, les produits consistant en des adjuvants modificateurs des enduits de lissage traditionnels.

On attend d'un primaire qu'il réponde à un quadruple objectif : reconstituer superficiellement le support sur lequel il est appliqué ; jouer un rôle curatif par l'agglomération des poussières, le colmatage des microfissures, un traitement antifongique et insecticide et une hydrofugation ; réhomogénéiser les surfaces ; et constituer un promoteur d'adhérence des enduits de lissage ou d'égalisation.

A l'heure actuelle, les primaires d'adhérence sont, soit des colles polychloroprène diluées, soit des solutions de poly(acétate de vinyle) dans de l'alcool éthylique, méthylique ou isopropylique, soit des dispersions aqueuses de différents polymères.

L'intérêt des colles polychloroprène diluées serait une certaine résistance au passage de l'eau, fort utile pour éviter la déformation des bois, dans le case de l'application ultérieure des enduits de lissage sur des parquets. De plus, les solvants agressifs (acétone, cyclohexane, acétate d'éthyle) de la partie volatile de ces colles permettent la dissolution superficielle des anciens "polishes" ou cires, présents à la surface des bois cirés, des vernis ou des carrelages. L'inconvénient de ces colles est toujours leur très grande inflammabilité.

Quant aux solutions de poly(acétate de vinyle) dans les alcools précités, elles présentant l'avantage de pénétrer profondément dans les supports très poreux, de les consolider surperficiellement et d'agglomérer les poussières. Toutefois, elles présentent les inconvénients d'adhérer mal sur les cires et "polishes", et d'être inflammables et toxiques.

Quant aux dispersions aqueuses de polymères, il en existe un très grand nombre. D'une part, les polymères utilisés sont nombreux ; on peut citer, entre autres, le poly(acétate de vinyle) plus ou moins plastifié, les polymères styrène-acide acrylique, les polymères butadiène-styrène, le polychloroprène, le poly(versatate de vinyle), les copolymères éthylène-acétate de vinyle (EVA), les polyacrylates et les copolymères de l'acide acrylique, les combinaisons des résines époxy et de résines polyacrylates. De même, ces polymères sont dispersés dans des systèmes de tensio-actifs qui sont également très nombreux, et dont la teneur en matière sèches est totalement disparate. Egalement, les modes d'emploi de ces dispersions aqueuses de polymères sont très différents les uns des autres, et elles conduisent à des résultats pratiques très variables.

Recherchant une formulation optimale pour un primaire, en fonction des différentes exigences précitées, d'après les particularités des polymères disponibles (nature, concentration, et caractéristiques physiques et chimiques), la Société Déposante a, dans ses premières investigations, effectué des séries de mesures sur un complexe type ; ciment (constituant un support courant) + primaire + enduit de lissage. Ces recherches lui ont permis de constater un avantage positif, c'est-à-dire une qualité du système pouvant être démontrée par une amélioration significative des performances, dans 10% des cas seulement. En effet, elle a pu observer l'inutilité du primaire, par le fait que les performances mécaniques restent inchangées, dans environ 30% des cas, et la nocivité du système, c'est-à-dire que le primaire conduit à des caractéristiques mécaniques inférieures, dans 60% des cas.

Ces résultats surprenants l'ont amené à abandonner cette voie de recherche, ainsi que celle consistant à optimiser les enduits de lissage comportant des adjuvants comme indiqué ci-dessus, car la plupart des dispersions de polymères utilisées pour la préparation des primaires le sont également pour la composition des adjuvants, avec, en principe, des additifs supplémentaires, agents anti-mousse, agents tensio-actifs, agents anti-fongiques, rétenteurs d'eau, etc., ces produits étant introduits en doses variables dans l'enduit de lissage lorsqu'il est gâché, avant d'être étalé sur le sol.

Là également, la disparité des polymères, l'adéquation supposée des additifs, le rapport approximatif et variable des poids des polymères et de ciment, expliquent l'efficacité limitée et aléatoire des systèmes actuels.

La Société Déposante a pu cependant démontrer que le problème posé pouvait être résolu et elle propose la solution originale d'un enduit jouant à la fois le rôle de primaire et d'enduit de lissage de l'état antérieur de la technique et présentant l'avantage complémentaire de pouvoir s'appliquer sur tous les sols sans nécessiter de traitement préalable. Elle a pu en effet mettre au point des compositions qui répondent à cet objectif et qui assurent une égalisation correcte des sols de construction, ces compositions étant essentiellement constituées d'au moins un liant polymère choisi pour que l'enduit formé après durcissement de la couche appliquée puisse adhérer aux sols existants de toutes natures, et présente une surface parfaitement plane, permettant la pose directe du nouveau revêtement, ainsi qu'une hauteur suffisante pour rattraper les différences de niveau généralement rencontrées sur les sols à rénover. On connaît par le brevet britannique GB-A-714782 une masse auto-nivelante qui comprend du sable comme constituant majeur et une émulsion de poly(acétate de vinyle) comme constituant mineur, et qui peut être appliquée à la truelle sur un sol, tel qu'un plancher en bois, avant l'installation d'un revêtement de sol résilient. Le poly(acétate de vinyle) ne convient pas pour être appliqué sur des sols autres que ceux à base de bois, si bien qu'il ne répond pas à l'objectif visé par la présente invention, de choisir le liant polymère pour que l'enduit formé après durcissement puisse adhérer aux sols existants de toute nature.

La présente invention a donc d'abord pour objet un procédé d'égalisation d'un sol de construction existant dans le but de le rénover par la pose d'un nouveau revêtement de sol, ledit sol pouvant être d'une nature quelconque et pouvant comporter des irrégularités de surface et des aspérités constituées par des fragments ou traces de colles provenant d'un précédent revêtement qui aurait adhéré à un support sous-jacent et que l'on aurait décollé, caractérisé par le fait qu'on applique sur le sol à égaliser une couche d'une composition durcissable, essentiellement constituée d'au moins un liant polymère choisi parmi les copolymères styrène-acide acrylique, les copolymères butadiène-styrène et les copolymères éthylèneacétate de vinyle, ladite couche présentant une surface parfaitement plane, permettant la pose directe du nouveau revêtement ainsi qu'une hauteur suffisante pour rattraper les différences de niveau généralement rencontrées sur les sols à rénover.

Par "composition essentiellement constituée de", on entend que ladite composition est sensiblement exempte de ciment ou autre liant hydraulique, tel que préconisé dans l'art antérieur.

Ainsi, il devient possible de rénover, d'une façon simple et unique, tous les supports existants, dans l'état dans lequel ils se trouvent ou bien qui comportent des fragments provenant de revêtements précédents dans la mesure où ceux-ci étaient parfaitement adhérents aux sols. On comprend l'intérêt de ce procédé qui permet

3

de placer un revêtement neuf sans ôter les traces de colle ou de mousse qui seraient restées accrochées au plancher ou à tout support lorsque par exemple une moquette aurait été décollée de ce plancher ou support. Pour ce travail, on devait, par le passé, faire appel à un personnel qualifié.

Tous les supports actuellement existants peuvent être rénovés par le procédé de l'invention. On citera, en particulier, les supports en bois (planchers), en matériaux fibreux, en ciment, en carrelages, en céramiques, en marbre, ainsi que les moquettes, les revêtements aiguilletés, et les différents revêtements classiques comme le Balatum®, le Linoléum®, le Gerflex®,

De préférence, le liant polymère est choisi pour être capable de former un enduit d'égalisation d'une hauteur d'au moins 3 mm, de préférence d'au moins 5 mm. Cette hauteur correspond à la hauteur des dénivellements généralement rencontrés dans la pratique, par exemple, lorsqu'on souhaite égaliser un support consistant en une moquette existante sur laquelle étaient posés des objets lourds, comme des meubles, qui se sont enfoncés dans celle-ci de quelques millimètres.

De préférence, les différents constituants de la composition selon l'invention sont choisis parmi les matières ininflammables et non toxiques.

Par ailleurs, le liant polymère est choisi avantageusement de sorte que la composition résultante soit durcissable par réactivité avec l'air ambiant, par exemple lors de l'exposition de la composition à l'humidité atmosphérique ou à l'oxygène, ou par suite de l'évaporation d'un inhibiteur de prise. On se trouve, dans ce cas, en présence d'un liant polymère monocomposant.

Egalement, le liant polymère peut être associé à un durcisseur organique, constitué par exemple par un isocyanate ou une amine. On se trouve, dans ce cas, en présence d'un liant polymère à deux composants.

Les compositions selon l'invention peuvent également renfermer, en dehors des véhicules, généralement constitués par de l'eau, des adjuvants usuels, comme des solvants de coalescence tels que, par exemple, le white spirit ou un éther de glycol, des charges (poudres d'ardoise, silice fine, sables, etc.), des agents épaississants régulateurs de la viscosité de la composition finale (par exemple dérivés cellulosiques), des agents anti-mousse, des agents fongicides, des agents insecticides, des agents tensio-actifs, des agents d'hydrofugation, etc.

Conformément à la présente invention, le rapport pondéral entre le liant polymère et l'ensemble des charges est généralement au moins égal à 0,05 environ. Lorsque le liant polymère est une dispersion de copolymère styrène-acide acrylique, ce rapport est, de préférence, au moins égal à 0,12 environ.

L'exemple suivant est destiné à illustrer une composition selon la présente invention. La formulation est donnée en quantité pour 1000.

<u>Exemple</u>

On prépare une composition durcissable à l'air ambiant, destinée à constituer, après application, sur un sol existant, en enduit d'égalisation de la surface, en vue de la pose d'un nouveau revêtement, ladite composition étant formulée comme suit :

Eau ................................... 90

Substance anti-mousse commercialisée par
la Société "DIAMOND-SHAMROCK" sous la
dénomination "NOPCO NDV" ............... 0,25

Tensio-actif commercialisé par la Société
"SIDOVRE-SINNOVA" sous la dénomination
"HYDROPALAT 1710" ..................... 1,75

Tensio-actif commercialisé par la Société
"SIDOVRE-SINNOVA" sous la dénomination
"SINNOPAL OP 11" ..................... 1,25

Fongicide en quantité convenable pour
satisfaire aux exigences de la norme
NF X 41514 A et B ..................... 0,25

White spirit commercialisé par la Société
"LAMBERT-RIVIERE" ..................... 6,5

Dispersion de copolymère styrène-acide
acrylique commercialisée sous la dénomination "ACRONAL 290D" par la Société
"B.A.S.F." ............................ 120

Poudre d'ardoise commercialisée par la
Société "ORTMANS" ..................... 87,5

Silice fine de répartition granulométrique comprise entre 5 et 50 $\mu$m,
commercialisée par la Société "SIFRACO".. 92,5

Sable SB commercialisé par la Société
"FULCHIRON" ........................... 550

Dérivé cellulosique commercialisé par
la Société "SPCI" sous la dénomination
"CELALOL 25 MDS" ..................... 1,25

Eau ................................... 48,75
                                        ————
                                        1000

## Revendications

1. Procédé d'égalisation d'un sol de construction existant dans le but de le rénover par la pose d'un nouveau revêtement de sol, ledit sol pouvant être d'une nature quelconque et pouvant comporter des irrégularités de surface et des aspérités constituées par des fragments ou traces de colle provenant d'un précédent revêtement qui aurait adhéré à un support sous-jacent et que l'on aurait décollé, caractérisé par le fait qu'on applique, sur le sol à égaliser, une couche d'une composition durcissable essentiellement constituée d'au moins un liant polymère choisi parmi les copolymères styrène-acide acrylique, les copolymères butadiène-styrène et les copolymères éthylène-acétate de vinyle, ladite couche présentant une surface parfaitement plane, permettant la pose directe du nouveau revêtement ainsi qu'une hauteur suffisante pour rattraper les différences de niveau généralement rencontrées sur les sols à rénover.

2. Procédé selon la revendication 1, caractérisé par le fait qu'on choisit un liant polymère capable de former un enduit d'égalisation d'une hauteur d'au moins 3 mm.

3. Procédé selon l'une des revendications 1 et 2, caractérisé par le fait qu'on choisit le liant polymère pour que la composition résultante soit durcissable par réactivité avec l'air ambiant, par exemple lors de l'exposition à l'humidité atmosphérique ou à l'oxygène, ou par l'évaporation d'un inhibiteur de prise.

4. Procédé selon l'une des revendications 1 et 2, caractérisé par le fait qu'on associe le liant polymère à un durcisseur organique, constitué par exemple par un isocyanate ou une amine.

5. Procédé selon l'une des revendications 1 à 4, caractérisé par le fait qu'on combine avec le liant polymère au moins un véhicule et/ou au moins un adjuvant choisi parmi les solvants de coalescence, les charges, les agents épaississants, les agents anti-mousse, les agents antifongiques, les agents insecticides, les agents tensioactifs et les agents d'hydrofugation.

6. Procédé selon la revendication 5, caractérisé par le fait qu'on utilise un rapport du liant polymère à l'ensemble des charges au moins égal à 0,05.

7. Procédé selon la revendication 1, caractérisé par le fait qu'on utilise, comme liant polymère, un copolymère styrène-acide acrylique et que la composition renferme en outre des charges, le rapport du liant polymère à l'ensemble des charges étant au moins égal à 0,12.

## Patentansprüche

1. Verfahren zum Einebnen eines bestehenden Bodens eines Bauwerks mit dem Ziel, den Boden durch Verlegen eines neuen Bodenbelags zu renovieren, wobei der Boden beliebiger Art sein und Oberflächenunregelmäßigkeiten und -unebenheiten aufweisen kann, die von Fragmenten oder Spuren eines Klebers gebildet sind, welche von einem früheren Belag stammen, der auf einen darunterliegenden Träger geklebt worden ist und abgelöst wurde, dadurch gekennzeichnet, daß man auf den einzuebnenden Boden eine Schicht aus einer aushärtbaren Zusammensetzung aufbringt, die im wesentlichen aus mindestens einem Polymer-Bindemittel besteht, das ausgewählt ist aus der Gruppe bestehend aus den Styrol-Acrylsäure-Copolymeren, den Butadien-Styrol-Copolymeren und den Ethylen-Vinylacetat-Copolymeren, wobei diese Schicht eine vollkommen ebene Oberfläche, die das direkte Verlegen eines neuen Belages erlaubt, sowie eine ausreichende Höhe aufweist, um die Niveauunterschiede, die man im allgemeinen bei den zu renovierenden Böden antrifft, zu beseitigen.

2. Verfahren nach Anspruch 1, dadurch gekennzeichnet, daß man ein Polymer-Bindemittel wählt, das imstande ist, eine Einebnungsschicht einer Höhe von mindestens 3 mm zu bilden.

3. Verfahren nach Anspruch 1 oder 2, dadurch gekennzeichnet, daß man das Polymer-Bindemittel so auswählt, daß die resultierende Zusammensetzung durch Reaktion mit der Umgebungsluft, z.B. wenn sie der Luftfeuchtigkeit oder dem Sauerstoff ausgesetzt ist, oder durch Verdampfen eines Abbindeinhibitors, aushärtbar ist.

4. Verfahren nach Anspruch 1 oder 2, dadurch gekennzeichnet, daß man das Polymer-Bindemittel mit einem organischen Härter in Verbindung bringt, der z.B. von einem Isocyanat oder einem Amin gebildet ist.

5. Verfahren nach einem der Ansprüche 1 bis 4, dadurch gekennzeichnet, daß man mit dem Polymer-Bindemittel mindestens ein Lösungsmittel und/oder mindestens ein Zusatzmittel, ausgewählt aus den Koaleszenzlösungsmitteln, den Füllstoffen, den Verdickungsmitteln, den Antischaummitteln, den Fungiziden, Insektiziden, den oberflächenaktiven Stoffen und den wasserabstoßenden Mitteln, kombiniert.

6. Verfahren nach Anspruch 5, dadurch gekennzeichnet, daß man ein Verhältnis des Polymer-Bindemittels zu der Gesamtheit der Füllstoffe von mindestens 0,05 verwendet.

7. Verfahren nach Anspruch 1, dadurch gekennzeichnet, daß man als Polymer-Bindemittel ein Styrol-Acrylsäure-Copolymer verwendet, und daß die Zusammensetzung weiters Füllstoffe enthält, wobei das Verhältnis des Polymer-Bindemittels zu der Gesamtheit der Füllstoffe mindestens 0,12 beträgt.

**Claims**

1. Process for levelling an existing structural floor for the purpose of renewing it by laying a new floor covering, it being possible for the said floor to be of any kind and to comprise surface irregularities and asperities consisting of fragments or traces of adhesive originating from a preceding covering which might have adhered to an underlying substrate and which would have been lifted off, characterised by applying to the floor to be levelled a layer of a curable composition consisting essentially of at least one polymeric binder chosen from styrene-acrylic acid copolymers, butadiene-styrene copolymers and ethylene-vinyl acetate copolymers, the said layer having a perfectly planar surface permitting the direct laying of the new covering as well as sufficient height to compensate the level differences generally encountered on floors to be renewed.

2. Process according to Claim 1, characterised in that a polymeric binder capable of forming a levelling coating at least 3 mm in height is chosen.

3. Process according to either of Claims 1 and 2, characterised in that the polymeric binder is chosen so as to make the resulting composition either curable by ability to react with the surrounding air, for example by exposure to atmospheric moisture or to oxygen, or by the evaporation of a setting inhibitor.

4. Process according to either of Claims 1 and 2, characterised in that the polymeric binder is used in combination with an organic hardener consisting, for example, of an isocyanate or an amine.

5. Process according to one of Claims 1 to 4, characterised in that the polymeric binder is combined with at least one carrier and/or at least one adjuvant chosen from coalescence solvents, fillers, thickening agents, antifoaming agents, antifungal agents, insecticides, surface-active agents and waterproofing agents.

6. Process according to Claim 5, characterised in that a ratio of the polymeric binder to the total of the fillers of at least 0.05 is employed.

7. Process according to Claim 1, characterised in that the polymeric binder employed is a styrene-acrylic acid copolymer and that the composition additionally contains fillers, the ratio of the polymeric binder to the total of the fillers being at least 0.12.